# EUROPÄISCHE PATENTANMELDUNG

(11) **EP 2 000 025 A1**
(43) Veröffentlichungstag der Anmeldung: **10.12.2008**
(21) Anmeldenummer: 08010341.9
(22) Anmeldetag: 06.06.2008
(51) Int. Cl.: A01K 63/04

(54) **Aufzuchtanlage für Salzwasserfische**

(30) Priorität: 08.06.2007 DE 102007026538
(71) Anmelder: ERWIN SANDER ELEKTROAPPARATEBAU GMBH, 31311 Uetze-Eltze (DE)
(72) Erfinder: Sander, Martin, 31311 Uetze-Eltze (DE)
(74) Vertreter: Rehmann, Thorsten

(57) **Zusammenfassung**

Eine Aufzuchtanlage für Salzwasserfische mit einem Aufzuchtbecken (1) und einer Wasseraufbereitungseinrichtung (7), die einen ersten mechanischen Filter (2) zur mechanischen Reinigung des Wassers und mindestens einen biologischen Filter (3) zur biologischen Reinigung und Aufbereitung des Salzwassers umfasst und eine Zulaufleitung (5) und eine Ablaufleitung (6) aufweist, die beide mit dem Aufzuchtbecken (1) verbunden sind, wobei in der Wasseraufbereitungseinrichtung (7) der erste mechanische Filter (2) in Durchlaufrichtung vor dem biologischen Filter (3) angeordnet ist, zeichnet sich dadurch aus, dass die Wasseraufbereitungseinrichtung (7) mindestens einen zweiten mechanischen Filter (4) umfasst, der in Durchlaufrichtung hinter dem biologischen Filter (3) angeordnet ist.

## Beschreibung

Die Erfindung betrifft eine Aufzuchtanlage für Salzwasserfische mit einem Aufzuchtbecken und einer Wasseraufbereitungseinrichtung, die einen mechanischen Filter zur mechanischen Reinigung des Wassers und mindestens einen biologischen Filter zur biologischen Reinigung und Aufbereitung des Salzwassers umfasst und eine Zulaufleitung und eine Ablaufleitung aufweist, die beide mit dem Aufzuchtbecken verbunden sind, wobei in der Wasseraufbereitungseinrichtung der erste mechanische Filter in Durchlaufrichtung vor dem biologischen Filter angeordnet ist.

Eine ähnliche Aufzuchtanlage ist beispielsweise aus der DE 38 27 716 A1 für Süßwasserfische bekannt.

Beim Betrieb einer solchen Anlage für Salzwasserfische spielt die Wasseraufbereitung eine zentrale Rolle. Dabei werden auf biologischer, beispielsweise bakterieller, Basis arbeitende Filter eingesetzt, um im Wasser gelöste, unerwünschte Stoffe umzuwandeln und in ihre Bestandteile zu zersetzen, welche dann als Nährstoffe wieder zur Verfügung stehen.

Salzwasser, das einem Aufzuchtbecken entnommen wird, trägt eine große Anzahl Schwebstoffe, beispielsweise Futterreste oder Fischkot, mit sich. Diese Schwebstoffe können in einem Biofilter sowohl zu mechanischen als auch zu biologischen Problemen führen. Zum einen können sie zu mechanischen Verstopfungen führen. Zum anderen können beispielsweise in aeroben Filtern verstärkt unerwünschte anaerobe Zonen ausgebildet oder heterotrophe Kulturen unterstützt und nitrifizierende Kulturen zurückgedrängt werden. Dies alles senkt den Wirkungsgrad des biologischen Filters erheblich.

Daher ist es sinnvoll, vor dem biologischen Filter eine mechanische Aufbereitungsstufe vorzusehen, die die Schwebstoffe dem Wasser entzieht. Diese kann aus einem Sand- oder Trommelfilter bestehen oder als ein, beispielsweise aus der DE 199 09 172 C2 bekannter, Flotationsturm ausgebildet sein. in einem solchen Flotationsturm werden in das zu klärende Wasser feinste Luftblasen eingeleitet, die Kontakt zu den im Wasser befindlichen Schmutzpartikeln herstellen und diese beim Aufsteigen mit an die Oberfläche nehmen, an der sich ein Schaum bildet, der einfach entsorgt werden kann. Aus der DE 28 11 943 ist bekannt, mehrere dieser mechanischen Filterstufen hintereinander zu verwenden, um die Klärwirkung noch zu verstärken.

Damit kann gewährleistet werden, dass dem Biofilter bereits mechanisch reines Wasser zugeführt wird. Daher erreicht man auf diese Weise einen hohen Wirkungsgrad bei den für einen Biofilter wesentlichen Abbauprozessen, wie Nitrifikation und Mineralisation, da die durch die Schwebstoffe ausgelösten Probleme nicht auftreten. Dieser hohe Wirkungsgrad ist für die Reinheit des Wassers in der Fischzuchtanlage und damit für die Gesundheit des Fischbestandes von größter Bedeutung.

Nachteilig ist, dass es trotz dieser umfassenden mechanischen und biologischen Filterprozesse in Fischsystemen zu erheblichen Problemen durch Parasiten sowie viruelle und/oder bakterielle Krankheitserreger kommen kann. Diese werden in das Fischsystem geschleppt und bedrohen den Fischbestand. Chemische Gegenmittel sind beispielsweise in der industriellen Speisefischzucht wegen der Giftigkeit der verwendeten Stoffe nicht möglich oder zumindest nicht erwünscht.

Aus der DE 38 27 716 ist bekannt, das biologisch gereinigte Wasser erneut den mechanischen Filter durchlaufen zu lassen, bevor es dem Aufzuchtbecken wieder zugeführt wird. Nachteilig ist jedoch, dass der Energiebedarf für die in der genannten Druckschrift offenbarte Anordnung sehr hoch ist und dass es trotzdem zu den genannten Problemen durch Parasiten sowie viruelle und/oder bakterielle Krankheitserreger kommen kann.

Von dieser Problemstellung ausgehend, soll eine eingangs beschriebene Aufzuchtanlage für Salzwasserfische so verbessert werden, dass eine deutlich bessere Qualität des dem Aufzuchtbecken zugeführten Wassers erreicht und die Bedrohung des Fischbestandes durch Parasiten und Krankheitserreger weitgehend verhindert wird.

Zur Problemlösung umfasst die Wasserreinigungseinrichtung einer erfindungsgemäße Aufzuchtanlage mindestens einen weiteren mechanischen Filter, der in Durchflussrichtung hinter dem biologischen Filter angeordnet ist.

Durch die überraschend einfache Maßnahme, das aus dem biologischen Filter stammende Salzwasser in einem weiteren mechanischen Filter erneut mechanisch zu filtern, wird die Qualität des Wassers, welches nach dem Durchlaufen der Wasserreinigungseinrichtung dem Aufzuchtbecken wieder zugeführt wird, deutlich verbessert.

Durch die biologischen Prozesse in einem Biofilter werden einige der im Wasser gelösten Stoffe in ungelöste Stoffe überführt, sodass das den Biofilter verlassende Wasser wieder eine gewisse Menge an Trübstoffen mit sich führt. Diese Trübstoffe bestehen im Wesentlichen aus einer so genannten Belebtschlammflocke und können ein Fischsystem verschlammen und ihm Sauerstoff entziehen. Weitaus gravierender für das Fischsystem ist jedoch die Tatsache, dass diese Belebtschlammflocken Träger von viruellen und bakteriellen Krankheitserregern und Parasiten sein können. Durch diese Belebtschlammflocken, die im Biofilter generiert werden, gelangen die Parasiten und Krankheitserreger in das Fischsystem.

Diese Parasiten und Krankheitserreger können durch den zweiten Filter herausgefiltert werden. Dabei besteht die gesamte Aufzuchtanlage aus lediglich einem Wasserkreislauf, so dass dadurch die Energiekosten deutlich gesenkt werden. Dadurch, dass immer das gesamte, dem Aufzuchtbecken entnommene Wasser allen Filtern zugeführt wird, bevor es wieder dem Aufzuchtbecken zur Verfügung gestellt wird, wird die Menge des umzuwälzenden Wassers deutlich reduziert. Dadurch werden selbstverständlich auch die Energiekosten verringert und es können deutlich kleinere Pumpen im System verwendet werden, wodurch ebenfalls die Produktions- und Betriebskosten verringert werden.

Vorteilhafterweise sind der erste mechanische Filter und der weitere mechanische Filter unterschiedlich ausgebildet. Insbesondere vorteilhaft ist es, wenn der weitere mechanische Filter feiner ausgebildet ist als der erste mechanische Filter.

Damit wird den verschiedenen Aufgaben, die die beiden mechanischen Filter zu erfüllen haben, Rechnung getragen. Der erste mechanische Filter filtert relativ große Schwebstoffe, beispielsweise Futterreste oder Fischkot, die sich im Aufzuchtbecken in das Wasser gemischt haben, aus dem Wasser heraus. Danach wird es der biologischen Filterung zugeführt. Im biologischen Filter entstehen neue Trübstoffe, die als Träger von viruellen und bakteriellen Krankheitserregern und Parasiten dienen können. Diese sind wesentlich kleiner als die Schwebstoffe, die im ersten mechanischen Filter aus dem Wasser entnommen werden, das direkt aus dem Aufzuchtbecken stammt. Diese neuen Schwebstoffe werden im weiteren mechanischen Filter dem Wasser entzogen. Dazu muss dieser weitere Filter besonders ausgestaltet, insbesondere feiner oder engmaschiger als der erste mechanische Filter, sein.

Vorzugsweise ist zumindest einer der mechanischen Filter als Trommelfilter ausgebildet.

Dadurch, dass beide Filter auf die ihnen zugedachte Aufgabe speziell angepasst sind, wird die Wasserqualität des am Ende dem Aufzuchtbecken wieder zugeführten Wassers deutlich erhöht.

In allen Ausgestaltungen der erfindungsgemäßen Anlage werden die Belebtschlammflocken, die in dem biologischen Filter erzeugt werden, wieder dem Wasser entzogen. Daher kann der Einsatz anderer Sicherheitsmaßnahmen gegenüber viruellen, bakterieller oder parasitologischer Problematiken, wie beispielsweise Ozonung, entweder vermindert oder gänzlich vermieden werden. Neben einer Kostenersparnis bedeutet dies auch eine Verringerung des Sicherheitsrisikos.

Mit Hilfe einer Zeichnung sollen Ausführungsbeispiele der Erfindung nachfolgend näher erläutert werden. Es zeigt:
- Figur 1: Eine Ausführungsform der erfindungsgemäßen Anlage.
- Figur 2: Eine weitere Ausführungsform einer erfindungsgemäßen Anlage.
- Figur 3: Eine Ausführungsform einer Aufzuchtanlage aus dem Stand der Technik.

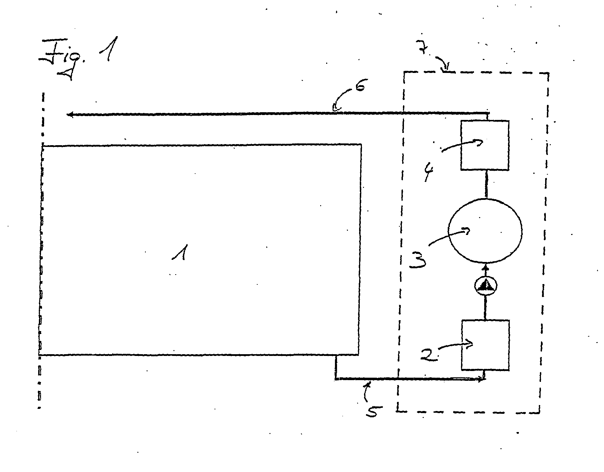

Figur 1 zeigt eine erste Ausführungsform einer erfindungsgemäßen Aufzuchtanlage. Das Salzwasser wird über die Zulaufleitung 5 aus dem Aufzuchtbecken 1 einem ersten mechanischen Filter 2 zugeführt, der es von Schwebstoffen befreit. Anschließend wird es dem Biofilter 3 zugeführt. Dem Biofilter 3 ist ein weiterer mechanischer Filter 4 nachgeschaltet, der die im Biofilter 3 erzeugten Trübstoffe dem Wasser entzieht. Somit wird über die Ablaufleitung 6 zum Becken 1 nahezu vollständig trübstofffreies Wasser zurückgeführt. Da die im Biofilter 3 erzeugten Trübstoffe dem Salzwasser im weiteren mechanischen Filter 4 entzogen wurden, wird auch eine deutlich erhöhte Sicherheit gegenüber Krankheitserregern und Parasiten gewährleistet.

Dadurch, dass die gesamte Aufzuchtanlage aus lediglich einem Wasserkreislauf besteht, und folglich das gesamte, dem Aufzuchtbecken 1 entnommene Wasser den Filtern 2, 3 und 4 zugeführt wird, ist die nötige Menge des umgewälzten Wassers deutlich reduziert. Dadurch können kleinere Pumpen verwendet werden, wodurch naturgemäß die Anschaffungs- und Betriebskosten der Anlage reduziert werden.

Sind der erste mechanische Filter 2 und der weitere mechanische Filter 4 unterschiedlich ausgebildet, um sie ihren jeweiligen Aufgaben entsprechend optimal anzupassen, kann dadurch die Wasserqualität des über die Ablaufleitung 6 dem Aufzuchtbecken 1 zugeführten Wassers nochmals deutlich gesteigert werden.

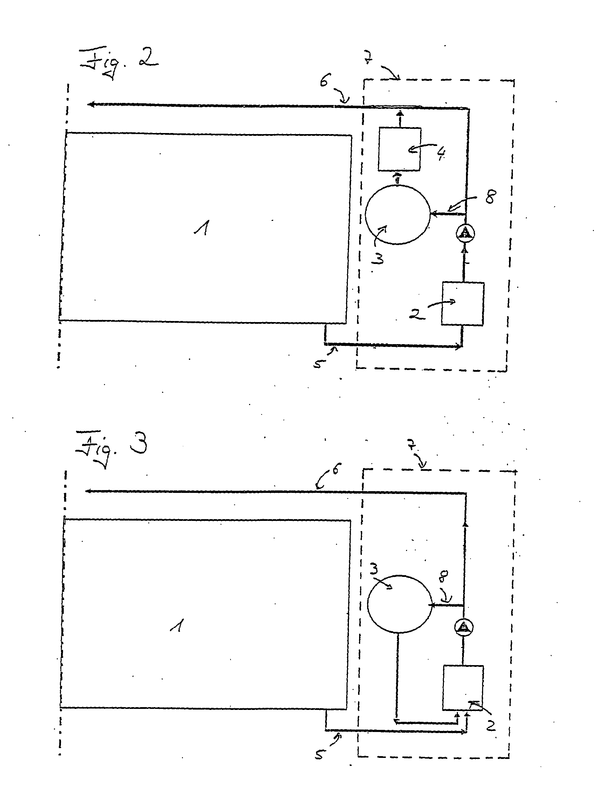

Figur 2 zeigt eine schematische Darstellung einer Ausführungsform einer erfindungsgemäßen Aufzuchtanlage. Nachdem das Salzwasser aus dem Aufzuchtbecken 1 über die Zulaufleitung 5 dem ersten mechanischen Filter 2 zugeführt wurde, wird nur ein Teil des so von Schwebstoffen befreiten Wassers über eine Abzweigleitung 8 zum Biofilter 3 geleitet. Der restliche Anteil des Wassers wird direkt wieder dem Aufzuchtbecken 1 zugeleitet. Der zum Biofilter 3 geleitete Teilstrom wird nach dem Verlassen des Biofilters 3 wieder einem weiteren mechanischen Filter 4 zugeleitet, der die in Biofilter 3 entstanden Schwebstoffe aus dem biologisch gereinigten Wasser herausfiltert. Danach wird auch dieser Teil des Wassers über die Ablaufleitung 6 dem Aufzuchtbecken 1 wieder zugeführt. Dadurch, dass über die Abzweigleitung 8 nur ein geringerer Teil des dem Aufzuchtbecken 1 entzogenen Salzwassers dem Biofilter 3 zugeführt wird, kann der weitere mechanische Filter 4 deutlich kleiner ausgebildet sein, als in der in Figur 1 gezeigten Ausführung der erfindungsgemäßen Anlage. Dadurch können Kosten eingespart werden, allerdings wird auch nur ein Teil des dem Aufzuchtbecken 1 entzogenen Salzwassers biologisch gereinigt.

Figur 3 zeigt eine schematische Darstellung einer Ausführungsform einer nicht erfindungsgemäßen Aufzuchtanlage. Wie in der in Figur 2 gezeigten Form wird nur ein Teil des dem Aufzuchtbecken 1 über die Zulaufleitung 5 entzogenen Salzwassers, nachdem es den ersten mechanischen Filter 2 durchlaufen hat, über eine Abzweigleitung 8 dem Biofilter 3 zugeführt. Nachdem das Wasser den Biofilter 3 verlassen hat, wird es zur Reinigung von den im Biofilter 3 entstandenen Schwebstoffen nun derart umgeleitet, dass es wieder dem ersten mechanischen Filter 2 zugeführt wird. Die Leistungsfähigkeit des ersten mechanischen Filters 2 muss an diese nun größere Durchsatzmenge angepasst werden, es kann jedoch ein zweiter mechanischer Filter eingespart werden. Dafür kann der Filter 2 nicht auf die verschiedenen Größen der herauszufilternden Schwebstoffe optimiert werden.

### Bezugszeichenliste

- 1: Aufzuchtbecken
- 2: erster mechanischer Filter
- 3: Biofilter
- 4: zweiter mechanischer Filter
- 5: Zulaufleitung zur Wasserreinigungseinrichtung
- 6: Ablaufleitung aus der Wasserreinigungseinrichtung
- 7: Wasserreinigungseinrichtung
- 8: Abzweigleitung zum Biofilter

## Patentansprüche

1. Aufzuchtanlage für Salzwasserfische mit einem Aufzuchtbecken (1) und einer Wasseraufbereitungseinrichtung (7), die einen mechanischen Filter (2) zur mechanischen Reinigung des Wassers und mindestens einen biologischen Filter (3) zur biologischen Reinigung und Aufbereitung des Salzwassers umfasst und eine Zulaufleitung (5) und eine Ablaufleitung (6) aufweist, die beide mit dem Aufzuchtbecken (1) verbunden sind, wobei in der Wasseraufbereitungseinrichtung (7) der mechanische Filter (2) in Durchlaufrichtung vor dem biologischen Filter (3) angeordnet ist, **dadurch gekennzeichnet, dass** die Wasseraufbereitungseinrichtung (7) mindestens einen weiteren mechanischen Filter (4) umfasst, der in Durchlaufrichtung hinter dem biologischen Filter (3) angeordnet ist.

2. Aufzuchtanlage nach Anspruch 1, **dadurch gekennzeichnet, dass** der mechanische Filter (2) und der weitere mechanische Filter (4) unterschiedlich ausgebildet sind.

3. Aufzuchtanlage nach Anspruch 2, **dadurch gekennzeichnet, dass** der weitere mechanische Filter (4) feiner ist als der mechanische Filter (2).

4. Aufzuchtanlage nach einem oder mehreren der vorstehenden Ansprüche, **dadurch gekennzeichnet, dass** zumindest einer der mechanischen Filter (2, 4) als Trommelfilter ausgebildet ist.
